# EUROPÄISCHE PATENTSCHRIFT

(11) **EP 4 014 111 B1**
(45) Veröffentlichungstag und Bekanntmachung des Hinweises auf die Patenterteilung: **08.05.2024**
(21) Anmeldenummer: 19801705.5
(22) Anmeldetag: 28.10.2019
(51) Int. Cl.: G06F 8/30

(54) **VERFAHREN UND VORRICHTUNG ZUR UNTERSTÜTZUNG EINER ROBOTIC PROCESS AUTOMATION**
METHOD AND DEVICE FOR SUPPORTING A ROBOTIC PROCESS AUTOMATION
PROCÉDÉ ET DISPOSITIF DE SUPPORT D'UNE AUTOMATISATION DE PROCESSUS ROBOTIQUE

(43) Veröffentlichungstag der Anmeldung: 22.06.2022
(73) Patentinhaber: Siemens Aktiengesellschaft, 80333 München (DE)
(72) Erfinder: MAIER, Rupert, 91330 Eggolsheim (DE)
(74) Vertreter: Siemens Patent Attorneys
(86) Internationale Anmeldenummer: PCT/EP2019/079388
(87) Internationale Veröffentlichungsnummer: WO 2021/083480

(56) Entgegenhaltungen:
- Anonymous: "javascript - How to match URL with regex number? - Stack Overflow", , 9. Oktober 2015 (2015-10-09), XP055705754, Gefunden im Internet: URL:https://stackoverflow.com/questions/33 047216/how-to-match-url-with-regex-number [gefunden am 2020-06-17]

## Beschreibung

Die Erfindung betrifft ein Verfahren und eine Vorrichtung zur Unterstützung einer robotic process automation.

Die Erfindung liegt insbesondere auf dem Gebiet der robotic process automation (RPA) bzw. robotergesteuerten Prozessautomatisierung. Eine Erklärung zu RPA ist u.a. in https://weissenberg-solutions.de/was-ist-robotic-processautomation/ zu finden. Unter RPA versteht man die automatisierte Bearbeitung von strukturierten Prozessen durch eine Automatisierungssoftware bzw. einen digitalen Software-Roboter. Diese innovative Technologie ermöglicht die Automatisierung sich wiederholender und regelbasierter Prozesse und Aufgaben, die bisher von Menschen ausgeführt werden. Bei dieser robotergesteuerten Prozessautomatisierung übernehmen die Software-Roboter (Bots) die Rollen und Aufgaben von Anwendern und interagieren mit anderen Softwaresystemen. Entgegen einer ersten reflexhaften Annahme sind Software-Roboter aber keine physisch existenten Maschinen, wie man sie aus der Fertigungsindustrie kennt. Es handelt sich vielmehr um Software-Anwendungen, die eine menschliche Interaktion mit Benutzerschnittstellen von Softwaresystemen nachahmen und damit automatisieren.

Bei einer Web-Applikation werden per Automatismus die jeweiligen Objekte der Web-Applikation angeklickt, ausgelesen, markiert bzw. ausgewählt oder geschrieben. Damit dies möglich ist, benötigt der Automatismus für jedes anzusprechende Objekt eine eindeutige Adresse. In statischen Webseiten (Webseiten mit konstantem Aufbau) besitzen die betroffenen Objekte normalerweise eindeutige Attribute, die zur Adressierung herangezogen werden können (Beispiele: class="tsf nj" oder value="Google-Suche") .

Schwierig hingegen ist die Adressierung von Objekten aus einer dynamisch erzeugten, listen-, tabellen-, oder baumartig strukturierten Webseite. Hier besitzen die einzelnen Objekte normalerweise kein eindeutiges Attribut, das zur Adressierung herangezogen werden könnte.

Viele Web-Browser sind in der Lage, die Xpath-Adresse (siehe https://de.wikipedia.org/wiki/XPath) eines Objektes zu unterstützen. Xpath-Adressen können ebenfalls zur Adressierung herangezogen werden. Doch bei den hier angesprochenen Objekten einer dynamisch erzeugten Webseite, variieren auch die zugehörigen Xpath-Adressen entsprechend.

Aus DE 10 2016 214 666 A1 ist ein Adressierungsschema bekannt, das bereits Taxonomien (Hierarchien) verwendet, um Adressen definieren zu können. Jedoch wird das Problem der variierenden XPath-Adressen damit nicht gelöst.

Aus Anonymous: "Javascript - How to match URL with regex number? - Stack Overflow", 9. Oktober 2015, XP055705754; URL:https://stackoverflow.com/questions/33 047216/how-to-match-url-with-regex-number, sind Programmkodes offenbart, wie eine URL mit einer Zufallszahl verglichen werden kann. Dabei wird eine Variable numberPart als Parameter für unterschiedlich ausgestalte Vergleichsfunktionen gewählt. Damit wird das oben genannte Problem, wie per Automatismus die jeweiligen Objekte der Web-Applikation ausgewählt werden sollen, nicht gelöst.

Es ist Aufgabe der Erfindung, das oben genannte Probleme zu überwinden.

Diese Aufgabe wird durch die unabhängigen Ansprüche gelöst. Vorteilhafte Weiterbildungen sind Gegenstand der abhängigen Ansprüche.

Die Erfindung beansprucht ein Verfahren zur Unterstützung einer robotic process automation, aufweisend folgende, von einem Prozessor einer Vorrichtung ausführbare Schritte:
- Bereitstellen einer Definition für die robotic process automation, die dazu ausgelegt ist, die in die Definition eingebundenen Objekte einer Gruppe von Objekten, welche manuell durch eine Benutzerinteraktion mit einem Rechner/Computer auswählbar sind, automatisiert mittels Steuerung durch eine Automatisierungssoftware (oft auch als Bot bezeichnet,) auswählbar zu machen bzw. zu beeinflussen,
dadurch gekennzeichnet, dass
- zu einer Erstellung der Definition mindestens zwei webbasierte Adressen herangezogen werden, wobei jeder Adresse ein Objekt der Gruppe zugeordnet ist, wobei
- die durch im Vergleich identifizierten, voneinander abweichenden Zeichen durch einen Platzhalter ersetzt werden, und wobei
- eine automatisierte Auswahlen eines oder mehrerer solcher Objekte durchgeführt wird, wobei die Auswahl mittels des jeweiligen Platzhalters geführt wird, durch welchen eine gemeinsame absolute Adresse für alle Objekte der Gruppe von Objekten referenziert und/oder abgeleitet wird, wobei bei der Adressierung aller Objekte der Gruppe der Platzhalter mit einer Indexzahl, welche in einer vorbestimmbaren Reihenfolge auf die Objekte der Gruppe verteilt wird, ersetzt wird, um die passende webbasierte Adresse des jeweiligen Objektes zu erhalten, und wobei das Adressierungsschema der mindestens zwei webbasierten Adressen in Form einer Taxonomie oder Ontologie bereitgestellt ist, wobei die einzelnen Ebenen der Taxomonie oder Ontologie einer Dimension der Gruppe entspricht, wenn die Gruppe an Objekten mehr als eine Dimension aufweist.

Es kann ein Platzhalter pro Dimension eingebracht werden.

Die Definition für die RPA kann auch ein Adressierungsschema sein, wobei die Objekte automatisiert mittels einer Steuerung durch eine Automatisierungssoftware (oft auch als Bot bezeichnet) auswählbar und automatisiert beeinflussbar sind, während diese ansonsten nur manuell durch eine Benutzerinteraktion mit einem Rechner/Computer auswählbar sind bzw. wären. Zur absoluten bzw. physikalischen Adressierung von Objekten können als webbasierte Adressen beispielsweise XPath-Adressen verwendet werden.

Um zu erkennen bzw. zu identifizieren, welche Stelle innerhalb der XPath-Adresse welcher Dimension entspricht, werden die XPath-Adressen mehrere Objekte miteinander verglichen.

Eine Typisierung für eine Gruppe an Objekten einer Webseite ermöglicht, dass Objekte, deren Adressen miteinander verglichen werden, vorzugweise vom gleichen Objekttyp sind oder dem gleichen Objekttyp zugeordnet und gegebenenfalls entsprechend des Objekttyps kenntlich gemacht werden. Die Objekte der gleichen Gruppe können vor allem optisch z.B. mit einer Farbmarkierung oder unterschiedlichen Schriftdarstellungen markiert werden. Die Objekte einer anderen Gruppe können anders farblich oder einer anderen Schrift dargestellt werden.

Wenn die Gruppe an Objekten mehr als eine Dimension aufweist, können alle zur selben Dimension gehörigen Objekte - ggf. wie oben beschrieben optisch - gleichzeitig kenntlich gemacht werden.

Die Indexzahl des Platzhalters kann in einer vorbestimmbaren Reihenfolge (inkrementieren) auf die Objekte der Gruppe verteilt werden.

Ein weiterer Aspekt der Erfindung ist eine Vorrichtung mit einem Prozessor, welcher zur Unterstützung einer robotic process automation konfiguiert ist, aufweisend:
- eine Bereitstellungseinheit, die dazu ausgelegt ist, ein Adressierungsschema für die robotic process automation bereitzustellen, das die in die Definition eingebundenen Objekte einer Gruppe von Objekten auswählbar gestaltet, damit diese automatisiert mittels einer Steuerung durch eine Automatisierungssoftware ansprechbar sind, dadurch gekennzeichnet, dass
- zur Erstellung dieser Definition mindestens zwei webbasierte Adressen herangezogen sind, wobei jeder Adresse ein Objekt der Gruppe zugeordnet ist,
- eine Vergleichseinheit, die dazu ausgelegt ist, mindestens zwei webbasierten Adressen in Hinblick auf Abweichungen in den Zeichenketten der webbasierten Adressen miteinander zu vergleichen, um eine zusammenhängende Stelle mit mindestens einer Abweichung zu identifizieren, die einer Zahl entsprechen,
- eine Umwandlungseinheit, die dazu ausgelegt ist, im Vergleich identifizierte, abweichenden Zeichen durch jeweils einen Platzhalter zu ersetzen,
- eine Auswahleinheit, die dazu ausgelegt ist, eines oder mehrerer solcher Objekte automatisiert auszuwählen, wobei die Auswahl mittels des jeweiligen Platzhalters führbar ist, durch welchen eine gemeinsame absolute Adresse aller Objekte der Gruppe von Objekten referenzierbar und/oder ableitbar ist, wobei bei der Adressierung aller Objekte der Gruppe der Platzhalter mit einer Indexzahl, welche in einer vorbestimmbaren Reihenfolge auf die Objekte der Gruppe verteilt wird, ersetzt wird, um die passende webbasierte Adresse des jeweiligen Objektes zu erhalten, und
- wobei das Adressierungsschema der mindestens zwei webbasierten Adressen in Form einer Taxonomie oder Ontologie bereitgestellt ist, wobei die einzelnen Ebenen der Taxomonie oder Ontologie einer Dimension der Gruppe entspricht, wenn die Gruppe an Objekten mehr als eine Dimension aufweist.

Die im Vergleich identifizierte, abweichenden Zeichen können eine Zeichenfolge bilden.

Ausführungsformen der vorgenannten Vorrichtung können analog zu den oben aufgeführten Ausführungsformen des erfindungsgemäßen Verfahrens ausgestaltet sein.

Ein weiterer Aspekt der Erfindung sieht ein Computerprogrammprodukt mit Mitteln zur Durchführung des Verfahrens, wenn das Computerprogrammprodukt auf der genannten Vorrichtung zur Ausführung gebracht wird.

Die Vorrichtung sieht Mittel/Einheiten bzw. Module zur Durchführung des oben genannten Verfahrens vor, die jeweils hardwaremäßig und/oder firmwaremäßig und/oder softwaremäßig bzw. als Computerprogramm bzw. Computerprogrammprodukt ausgeprägt sein können.

Weitere Vorteile, Einzelheiten und Weiterbildungen der Erfindung ergeben sich aus der nachfolgenden Beschreibung von Ausführungsbeispielen in Verbindung mit den Zeichnungen.

Es zeigen:
- Figur 1: schematisch ein Beispiel einer RPA-Umgebung,
- Figur 2: ein Ablaufdiagramm des erfindungsgemäßen Vorgehens und
- Figur 3: zeigt ein Beispiel für eine Web-Seite, deren Objekte mit einer Xpath-Adresse adressierbar sind.

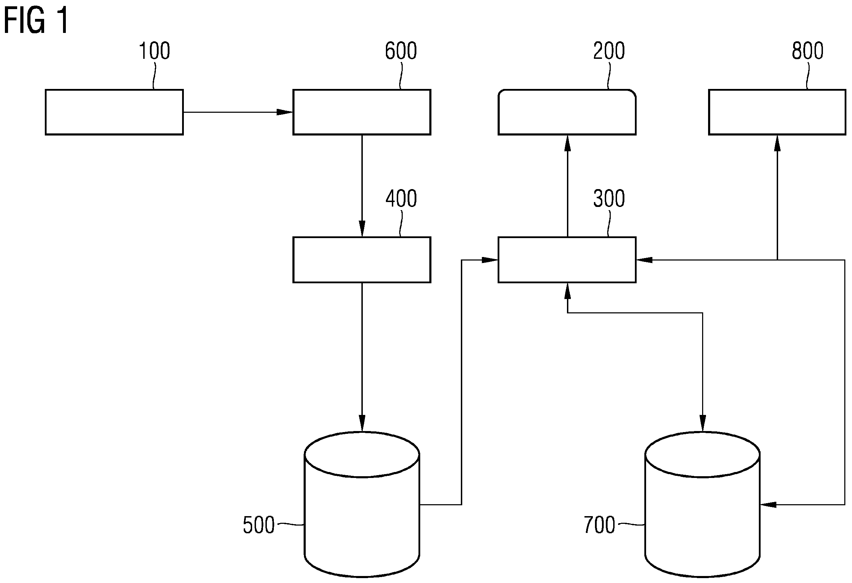

In Anlehnung an Figur 6 aus EP 3112965 A1 zeigt die vorliegende Figur 1 ein Beispiel einer RPA-Umgebung, in der die erfindungsgemäße Vorrichtung bzw. das erfindungsgemäße Verfahren eingesetzt werden kann.

Eine Erfassungseinheit 100 gibt Ausgabedaten in Form einer Beschreibung für einen Programmcode, für ein Skript bzw. für ein Makro aus. Diese Beschreibung umfasst eine Menge von Regeln, deren Befehle bzw. Instruktionen festlegen, wie eine Sequenz an Operationen bzw. Arbeitsschritten ausgelöst durch zumindest eine Benutzerinteraktion mit einem Computer/Rechner auf eine Sequenz an Operationen bzw. Arbeitsschritte ausgelöst durch eine Automatisierungssoftware (einen Bot) abgebildet wird. Diese Beschreibung kann gegebenenfalls durch einen Entwickler 600, welcher ein Mensch oder eine Rechenmaschine sein kann, geprüft und nach Bedarf korrigiert werden, um aus einer Mehrzahl von Beschreibungen möglicherweise von mehreren Rechenmaschinen oder Benutzern eine optimierte Auswahl zu treffen. Wenn eine Auswahl getroffen worden ist, dann kann eine oder mehrere Beschreibungen der Auswahl mittels eines Übersetzers 400 in eine oder in mehrere Definitionen für die RPA umgewandelt werden, welche in einer Scriptsprache geschrieben ist/sind, die unter anderem für webbasierte Adressen das Xpath-Format verwendet. Diese eine oder mehreren Definitionen umfassen Objekte einer Gruppe von Objekten, welche jeweils zum Inhalt einer webbasierten Applikation gehören. Ein Objekttyp von solchen Objekten kann durch eine Gruppe von Objekten definiert werden bzw. beispielsweise Auswahl-, Suchfelder etc. repräsentieren. Die Objekte sind mittels einer Benutzerinteraktion oder durch einer Automatisierungssoftware auswählbar. Diese Definitionen können in einer Bereitstellungseinheit in Form einer Definitionendatenbasis 500 gespeichert werden, auf die eine Verarbeitungseinheit 300 zugreifen kann, um beispielsweise die Inhalte dieser Objekte auf einem Bildschirm bzw. Display 200 anzuzeigen. Desweiten kann die Verarbeitungseinheit 300 mit einer Befehls- bzw. Instruktionendatenbasis interagieren. Die Befehle/Instruktionen können eine Menge von zusätzlichen Regeln umfassen, welche von den Definitionen gebildet und von der Beschreibung abgeleitet werden können. Auf die Instruktionendatenbasis 700 kann gegebenenfalls eine Person eines Support-Teams 800 zugreifen, um debugging und/oder Aktualisierungen durchzuführen. Die Verarbeitungseinheit 300 kann nicht dargestellte Funktionalitäten einer Automatisierungssoftware umfassen. Eine solche Definition umfasst hierbei mindestens zwei webbasierte Adressen, wobei jeder Adresse ein Objekt der Gruppe umfasst. Wie folgt beschrieben, können die Objekte automatisiert auswählbar gestaltet werden:

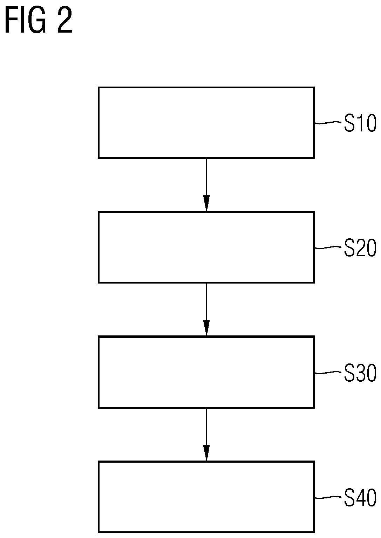

Figur 2 zeigt hierbei einen Ablauf des erfindungsgemäßen Vorgehens, dessen Schritte mit S10 bis S40 gekennzeichnet sind:
S10: Ausgehend von der Zuordnung einer webbasierten Adresse (vorzugsweise XPath) zu jedem Objekt,
S20: werden mindestens zwei webbasierte Adressen miteinander in Hinblick auf Unterschiede in den Zeichenketten verglichen und so eine zusammenhängende Stelle mit Abweichungen identifiziert, die einer Zahl entsprechen. Dies kann durch eine nicht dargestellte Vergleichseinheit geschehen, die im Beispiel in der Verarbeitungseinheit 300 implementiert sein kann.
S30: Dann werden die durch den Vergleich identifizierten, abweichenden Zeichen durch jeweils einen Platzhalter ersetzt. Das Ersetzen kann durch eine nicht dargestellte Umwandlungseinheit geschehen, die im Beispiel in der Verarbeitungseinheit 300 implementiert sein kann.

Der Platzhalter kann eine Variable oder ein Pointer (Verweis) auf eine Variable sein.

S40: Durch die Automatisierungs-Funktionalität und letztlich mittels Steuerung durch eine Automatisierungssoftware können das eine oder die mehrere Objekte automatisiert, d.h. ohne Interaktion eines Benutzers, sequentiell ausgewählt werden, wobei die Auswahl mittels des jeweiligen Platzhalters geführt bzw. gesteuert wird, durch welchen eine absolute Adresse des Objektes referenziert und/oder abgeleitet wird. Hierzu kann eine nicht dargestellte Auswahleinheit verwendet werden, die im Beispiel in der Verarbeitungseinheit 300 implementiert sein kann.

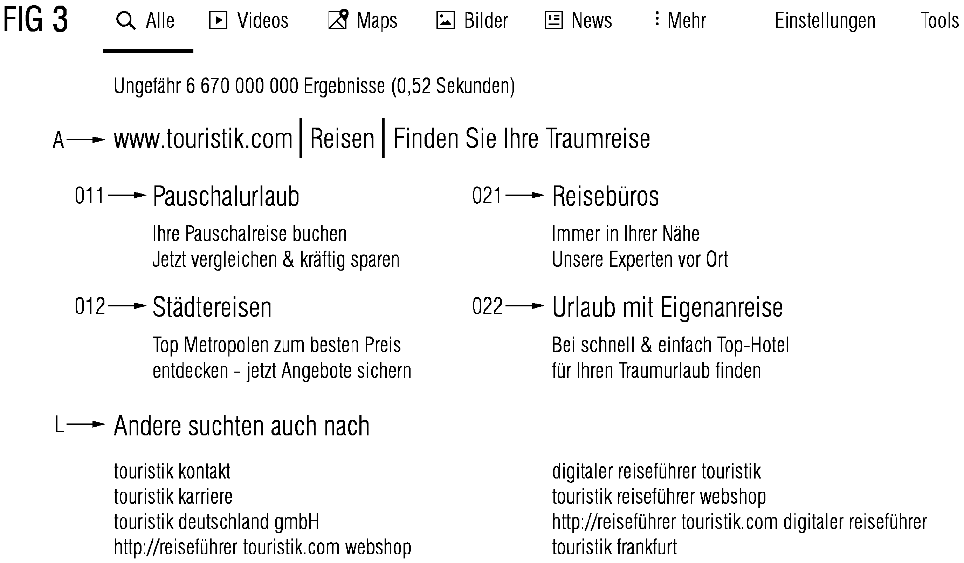

In Figur 3 wird ein Beispiel zu einer Webseite A z.B. www.touristik.com gezeigt.

Das Beispiel bezieht sich auf webbasierte XPath-Adressen mehrerer Objekte O11, 012, 021, O22 einer zusammengehörenden Gruppe.

Die einzelnen Objekte besitzen folgende Adressen:
O11 mit Adresse: "//*[@id="tads"]/ol/li/ul/li[0]/h3/a"
012 mit Adresse: "//*[@id="tads"]/ol/li/ul/li[1]/h3/a"
021 mit Adresse: "//*[@id="tads"]/ol/li/ul/li[2]/h3/a"
O22 mit Adresse: "//*[@id="tads"]/ol/li/ul/li[3]/h3/a"

Diese Adressen werden miteinander verglichen. Ist lediglich an einer Stelle in der Zeichenkette der Adresse ein unterschiedlicher Teilstring, der einer Zahl entspricht, wird davon ausgegangen, dass alle Objekte dieser Gruppe unterschiedliche Zeichen an dieser Stelle besitzen und an den übrigen Stellen der Zeichenkette der XPath-Adresse identisch sind. Im Beispiel ist das abweichende Zeichen eine Zahl im Intervall von 0 bis 3.

Möchte man beispielsweise die vier Objekte O11, 012, 021, O22 eines Suchergebnisses adressieren, so müssen die Unterschiede zwischen mindestens zwei XPath-Adressen analysiert bzw. identifiziert werden: z.B.
O11 mit Adresse: "//*[@id="tads"]/ol/li/ul/li[0]/h3/a"
012 mit Adresse: "//*[@id="tads"]/ol/li/ul/li[1]/h3/a"

Die vorbestimmbare (ggf. gleiche) Stelle mit der unterschiedlichen Zahl kann nun mit einem entsprechenden Platzhalter z.B. Variablen (z.B. "ObjekteTitel") versehen werden. Auf diese Weise entsteht eine gemeinsame "physikalische Adresse" für alle Objekte der betroffenen Objektgruppe.

Beispiel:
"//*[@id="tads"]/ol/li/ul/li[ObjekteTitel]/h3/a"

Setzt man nun auch noch ein hierarchisches Adressierungsschema g ein, so ergeben sich einfach lesbare, virtuelle Adressen, aus denen hervorgeht, wie die zugehörige absolute bzw. physikalische Adresse der gewünschten Adresse zu interpretieren und einzusetzen ist.

Beispiel:
Root
WebApplicationen
GoogleSuche
ObjekteTitel

Wobei der Zweig "GoogleSuche" dem Objekttyp "URL" und den Wert "https://www.google.de" besitzen würde.

Der Zweig "ObjekteTitel" ist vom Objekttyp "WebObjGroup" und besitzt die physikalische Adresse "//*[@id="tads"]/ol/li/ul/li[ObjekteTitel]/h3/a".

Dieser Zweig hängt ja unter dem Zweig "GoogleSuche". Daher ist klar, dass es sich hierbei um eine Adresse zur Adressierung von Objekten der "Google Suche" handelt. Der Objekttyp "WebObjGroup" deutet zusätzlich darauf hin, dass es sich um eine dynamisch generierte Gruppe an Objekten handelt, die auf diese Weise adressiert wird.

Die resultierende virtuelle Adresse dieses Beispiels wäre:
"Root#WebApplikationen#GoogleSuche#ObjekteTitel"

Erfindungsgemäß stellt man nun auch noch sicher, dass in jedem Fall der Name eines Zweiges vom Objekttyp "WebObjGroup" identisch zum Platzhalter in der zugehörigen physikalischen Adresse ist (in unserem Beispiel heißen beide "ObjekteTitel") .

Auf diese Weise ist klar, welcher Teil der physikalischen Adresse einem Platzhalter entspricht. Um später alle Objekte der Gruppe adressieren zu können, wird an dieser Stelle statt des Platzhalters ein variabler Index eingefügt, um die passende XPath-Adresse des jeweiligen Objektes zu erhalten. In der Regel muss hierbei bei Null begonnen und inkrementiert werden, bis zu der sich so ergebenden XPath-Adresse kein zugeordnetes Objekt mehr gefunden werden kann.

Aus der physikalischen Adresse der Taxonomie resultieren so die gültigen Xpath-Adressen aller vorhandenen Objekt-Titel.

Beispiel aus "//*[@id="tads"]/ol/li/ul/li[ObjekteTitel]/h3/a" ergibt sich:
"//*[@id="tads"]/ol/li/ul/li[0]/h3/a" ("Pauschalurlaub")
"//*[@id="tads"]/ol/li/ul/li[1]/h3/a" ("Reisebüros")
"//*[@id="tads"]/ol/li/ul/li[2]/h3/a" ("Städtereisen")
"//*[@id="tads"]/ol/li/ul/li[3]/h3/a" ("Urlaub mit Eigenanreise")

Auf Basis der verwendeten Hierarchiestruktur und des erfindungsgemäßen Verfahrens lassen sich auch mehrdimensionale Gruppen adressieren.

Anders als im obigen Beispiel werden in vielen Webapplikationen (auch in der Google Suche) mehrspaltige oder baumförmige Inhalte aufgelistet, die bzgl. ihrer XPath-Adresse in mehreren Dimensionen adressiert sind.

In einem solchen Fall würden beispielsweise die einzelnen Objekte des obigen Beispiels folgende Adressen haben:
O11 mit Adresse: "//*[@id="rso"]/div[1]/div/div/table/tbody/tr[1]/td[1]/div /span/h3/a"
012 mit Adresse: "//*[@id="rso"]/div[1]/div/div/table/tbody/tr[1]/td[2]/div /span/h3/a"
021 mit Adresse: "//*[@id="rso"]/div[1]/div/div/table/tbody/tr[2]/td[1]/div /span/h3/a"
O22 mit Adresse: "//*[@id="rso"]/div[1]/div/div/table/tbody/tr[2]/td[2]/div /span/h3/a"

Dies könnte über die folgende Taxonomie erreicht werden:
Root
WebApplicationen
GoogleSuche (https://www.google.de)
Suchalternativen (dient nur der Anschaulichkeit, welche in Figur 3 mit L bezeichnet ist)
Spalte
Zeile

Wobei Spalte die Adresse
"//*[@id="rso"]/div[1]/div/div/table/tbody/tr[Spalte]/td[1 ]/div/span/h3/a" und Zeile die Adresse
"//*[@id="rso"]/div[1]/div/div/table/tbody/tr[1]/td[Zeile] /div/span/h3/a" repräsentiert.

Wie aus den obigen Beispielen hervorgeht, ist es für den Benutzer zunächst nicht transparent, ob die Objekte einer zusammengehörenden Gruppe entsprechend ihrer XPath-Adressen ein- oder mehrdimensional organsiert sind. Sobald aber zwei der gewünschten Objekte ausgewählt wurden, kann durch Einsatz des oben beschriebenen Zeichenfolgen- bzw. Zeichenkettenvergleiches der Adressen ermittelt werden, welche Objekte auch noch zu dieser Gruppe gehören. Diese können grafisch bzw. optisch (z.B. durch Umrahmung aller zur Gruppe gehörenden Objekte) im Browser kenntlich gemacht werden. Wenn die Objekte der Gruppe mehr als eine Dimension aufweisen, können die zur selben Dimension gehörigen Objekte entsprechen kenntlich gemacht werden.

So können dem Benutzer unmittelbar die innere Organisation der Webeinträge vermittelt werden. Er kann so beispielsweise erkennen, ob eine mehrdimensionale Adressierung möglich bzw. nötig ist und wie etwa die Objekte einzelner Spalten oder Zeilen angesprochen werden können. In der Figur 3 können somit nach Auswahl zweier Objekte einer Spalte (z.B. die Objekte "Pauschalurlaub" und "Städtereisen") sofort alle Objekte farblich markiert werden, die dieser Dimension, im Beispiel derselben Spalte, angehören. Bei Selektieren mindesten zweier Objekte einer anderen Dimension (z.B. einer Zeile bestehend aus "Pauschalurlaub" und "Reisebüros") können auch alle Objekte dieser Dimension farblich markiert werden.

### Durch Verwendung der virtuellen Adresse

"Root#WebApplikationen#GoogleSuche#Suchalternativen#Spalte#Ze ile" lassen sich über die Platzhalter "Spalte" und "Zeile" alle Objekte der zweidimensionalen Matrix adressieren. Hierzu müssen die Wertebereiche beider Platzhalter durchlaufen werden. Durch Setzen der entsprechenden Werte (für Spalte und Zeile) ist aber auch die gezielte Adressierung einzelner Objekte möglich.

In den obigen Beispielen sind in den physikalischen Adressen noch immer Attributbezeichnungen enthalten (z.B. id="tads" oder id="rso"). Dies kann beim Zugriff auf die Objekte unter Umständen zu Problemen führen. Denn beispielsweise ändern sich diese Attributbezeichnungen bei vielen Webseiten beim wiederholten Laden. Es werden daher auch diese Attribute mit Platzhaltern ersetzt. Dies erfolgt, indem die Hierarchie der HTML-Seite (siehe nachfolgende Darstellung) in der Adresse nachgebildet wird. So entsteht eine andere XPath-Adresse.

Aus der obigen physikalischen Adresse
"//*[@id="tads"]/ol/li/ul/li[ObjekteTitel]/h3/a" ergibt sich so die Adresse
/HTML[1] /BODY[1] /DIV[7] /DIV[3] /DIV[10] /DIV[1] /DIV[2] /DIV[1] /D IV[1]/DIV[3]/DIV[1]/OL[1]/LI[1]/UL[1]/LI[ObjekteTitel]/H3[1]/ A[1]

In diesem Zusammenhang existieren zwei verschiedene Arten von XPath-Adressen. Der Chrome-Browser redet in diesem Fall von "XPath-Adressen und Full-XPath-Adressen).

Mit Hilfe der in die Adressen eingebrachten Platzhalter ggf. mit Index können die oben bereits erläuterten Automatisierungsfunktionen (z.B. Bots) die Objekte automatisiert auswählen und damit weitere von der Verarbeitungseinheit auszuführende Verarbeitungsschritte einleiten. Im Beispiel kann ein nächster Schritt eine Buchungsseite eines Pauschalurlaubes sein.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können in eine Vorrichtung integriert sein und dabei aus einer oder mehreren Einrichtungen bzw. Einheiten bestehen. Besteht ein Prozessor aus mehreren Einrichtungen, können diese zur parallelen oder sequentiellen Verarbeitung bzw. Ausführung von Instruktionen ausgelegt bzw. konfiguriert sein.

## Patentansprüche

1. Verfahren zur Unterstützung einer robotic process automation, aufweisend folgende, von einem Prozessor einer Vorrichtung ausführbare Schritte:
- Bereitstellen einer Definition für die robotic process automation, auch Adressierungsschema genannt, das dazu ausgelegt ist, die in die Definition eingebundenen Objekte (O11, 012, 021, O22) einer Gruppe von Objekten auswählbar zu gestalten, damit diese automatisiert mittels einer Steuerung durch eine Automatisierungssoftware ansprechbar sind,
**dadurch gekennzeichnet, dass**
- zur Erstellung dieser Definition mindestens zwei webbasierte Adressen herangezogen werden, wobei jeder Adresse ein Objekt der Gruppe zugeordnet ist, wobei
- ein Vergleich der mindestens zwei webbasierten Adressen miteinander in Hinblick auf Abweichungen in den Zeichenketten der webbasierten Adressen durchgeführt wird, um eine zusammenhängende Stelle mit mindestens einer Abweichung zu identifizieren, die einer Zahl entsprechen, und wobei
- die durch im Vergleich identifizierten, voneinander abweichenden Zeichen durch einen Platzhalter ersetzt werden, und wobei
eine automatisierte Auswahl eines oder mehrerer solcher Objekte durchgeführt wird, wobei die Auswahl mittels des jeweiligen Platzhalters geführt wird, durch welchen eine gemeinsame absolute Adresse für alle Objekte der Gruppe von Objekten referenziert und/oder abgeleitet wird, wobei bei der Adressierung aller Objekte der Gruppe der Platzhalter mit einer Indexzahl, welche in einer vorbestimmbaren Reihenfolge auf die Objekte der Gruppe verteilt wird, ersetzt wird, um die passende webbasierte Adresse des jeweiligen Objektes zu erhalten, und wobei das Adressierungsschema der mindestens zwei webbasierten Adressen in Form einer Taxonomie oder Ontologie bereitgestellt ist, wobei die einzelnen Ebenen der Taxomonie oder Ontologie einer Dimension der Gruppe entspricht, wenn die Gruppe an Objekten mehr als eine Dimension aufweist.

2. Verfahren nach dem vorhergehenden Anspruch, **dadurch gekennzeichnet, dass** die Objekte, deren Adressen miteinander verglichen werden, vom gleichen Objekttyp sind oder dem gleichen Objekttyp zugeordnet sind und gegebenenfalls entsprechend des Objekttyps kenntlich gemacht werden.

3. Verfahren nach dem vorhergehenden Anspruch, **dadurch gekennzeichnet, dass** ein Platzhalter pro Dimension eingebracht wird.

4. Verfahren nach einem der vorhergehenden Ansprüche, **dadurch gekennzeichnet, dass** wenn die Gruppe an Objekten mehr als eine Dimension aufweist, alle zur selben Dimension gehörigen Objekte gleichzeitig kenntlich gemacht werden.

5. Vorrichtung (300) mit einem Prozessor, welcher zur Unterstützung einer robotic process automation konfiguriert ist, aufweisend:
- eine Bereitstellungseinheit (500) in Form einer Definitionsdatenbasis (500), die dazu ausgelegt ist, ein Adressierungsschema für die robotic process automation bereitzustellen, das die in die Definition eingebundenen Objekte einer Gruppe von Objekten (O11, 012, 021, O22) auswählbar gestaltet, damit diese automatisiert mittels einer Steuerung durch eine Automatisierungssoftware ansprechbar sind, **dadurch gekennzeichnet, dass**
- zur Erstellung dieser Definition mindestens zwei webbasierte Adressen herangezogen werden, wobei jeder Adresse ein Objekt der Gruppe zugeordnet ist,
- eine in eine Verarbeitungseinheit implementierte Vergleichseinheit, die dazu ausgelegt ist, mindestens zwei webbasierten Adressen in Hinblick auf die Zeichenkette miteinander zu vergleichen, um eine zusammenhängende Stelle mit Abweichungen zu identifizieren, die einer Zahl entsprechen,
- eine in die Verarbeitungseinheit implementierte Umwandlungseinheit, die dazu ausgelegt ist, die im Vergleich identifizierte, abweichende Zeichen durch einen Platzhalter zu ersetzen,
- eine in die Verarbeitungseinheit implementierte Auswahleinheit, die dazu ausgelegt ist, eines oder mehrerer solcher Objekte automatisiert auszuwählen, wobei die Auswahl mittels des jeweiligen Platzhalters führbar ist, durch welchen eine gemeinsame absolute Adresse für alle Objekte der Gruppe von Objekten referenzierbar und/oder ableitbar ist, wobei bei der Adressierung aller Objekte der Gruppe der Platzhalter mit einer Indexzahl, welche in einer vorbestimmten Reihenfolge auf die Objekte der Gruppe verteilt wird, ersetzt wird, um die passende webbasierte Adresse des jeweiligen Objektes zu erhalten, und wobei das Adressierungsschema der mindestens zwei webbasierten Adressen in Form einer Taxonomie oder Ontologie bereitgestellt ist, wobei die einzelnen Ebenen der Taxomonie oder Ontologie einer Dimension der Gruppe entspricht, wenn die Gruppe an Objekten mehr als eine Dimension aufweist.

6. Vorrichtung nach dem vorhergehenden Anspruch, **dadurch gekennzeichnet, dass** die Objekte, deren Adressen miteinander verglichen werden können, vom gleichen Objekttyp sind oder dem gleichen Objekttyp zugeordnet sind und gegebenenfalls entsprechend des Objekttyps kenntlich gemacht werden.

7. Vorrichtung nach dem vorhergehenden Anspruch, **dadurch gekennzeichnet, dass** ein Platzhalter pro Dimension einbringbar ist.

8. Verfahren nach einem der vorhergehenden Vorrichtungsansprüche, **dadurch gekennzeichnet, dass** wenn die Gruppe an Objekten mehr als eine Dimension aufweist, alle zur selben Dimension gehörigen Objekte gleichzeitig kenntlich gemacht werden.

9. Computerprogrammprodukt mit Instruktionen zur Durchführung des Verfahrens nach einem der vorgenannten Verfahrensansprüche, wenn das Computerprogrammprodukt auf einer Vorrichtung nach einem der vorgenannten Vorrichtungsansprüche zur Ausführung gebracht wird.

## Claims

1. Method for supporting robotic process automation, having the following steps which can be carried out by a processor of an apparatus:
- providing a definition for the robotic process automation, also called an addressing scheme, which is designed to make the objects (O11, 012, 021, O22) in a group of objects that are included in the definition selectable so that they can be automatically addressed by automation software by means of a controller,
**characterized in that**
- at least two web-based addresses are used to create this definition, wherein an object in the group is assigned to each address, wherein
- the at least two web-based addresses are compared with one another with regard to discrepancies in the character strings of the web-based addresses in order to identify a contiguous point with at least one discrepancy corresponding to a number, and wherein
- the characters that differ from one another and are identified in the comparison are replaced with a placeholder, and wherein
one or more such objects are automatically selected, wherein the selection is made by means of the respective placeholder which references and/or derives a common absolute address for all objects in the group of objects, wherein, when addressing all objects in the group, the placeholder is replaced with an index number distributed among the objects in the group in a predeterminable order in order to obtain the appropriate web-based address of the respective object, and wherein the addressing scheme of the at least two web-based addresses is provided in the form of a taxonomy or ontology, wherein the individual levels of the taxonomy or ontology correspond to a dimension of the group if the group of objects has more than one dimension.

2. Method according to the preceding claim, **characterized in that** the objects whose addresses are compared with one another are of the same object type or are assigned to the same object type and are possibly marked according to the object type.

3. Method according to the preceding claim, **characterized in that** one placeholder is introduced for each dimension.

4. Method according to one of the preceding claims, **characterized in that**, if the group of objects has more than one dimension, all objects belonging to the same dimension are marked at the same time.

5. Apparatus (300) with a processor which is configured to support robotic process automation, having:
- a provision unit (500) in the form of a definition database (500) which is designed to provide an addressing scheme for the robotic process automation, which scheme makes the objects in a group of objects (O11, 012, 021, O22) that are included in the definition selectable so that they can be automatically addressed by automation software by means of a controller, **characterized in that**
- at least two web-based addresses are used to create this definition, wherein an object in the group is assigned to each address,
- a comparison unit which is implemented in a processing unit and is designed to compare at least two web-based addresses with one another with regard to the character string in order to identify a contiguous point with discrepancies corresponding to a number,
- a conversion unit which is implemented in the processing unit and is designed to replace the characters that differ and are identified in comparison with a placeholder,
- a selection unit which is implemented in the processing unit and is designed to automatically select one or more such objects, wherein the selection can be made by means of the respective placeholder which can reference and/or derive a common absolute address for all objects in the group of objects, wherein, when addressing all objects in the group, the placeholder is replaced with an index number distributed among the objects in the group in a predetermined order in order to obtain the appropriate web-based address of the respective object, and wherein the addressing scheme of the at least two web-based addresses is provided in the form of a taxonomy or ontology, wherein the individual levels of the taxonomy or ontology correspond to a dimension of the group if the group of objects has more than one dimension.

6. Apparatus according to the preceding claim, **characterized in that** the objects whose addresses can be compared with one another are of the same object type or are assigned to the same object type and are possibly marked according to the object type.

7. Apparatus according to the preceding claim, **characterized in that** one placeholder can be introduced for each dimension.

8. Method according to one of the preceding apparatus claims, **characterized in that**, if the group of objects has more than one dimension, all objects belonging to the same dimension are marked at the same time.

9. Computer program product having instructions for carrying out the method according to one of the preceding method claims when the computer program product is executed on an apparatus according to one of the preceding apparatus claims.

## Revendications

1. Procédé de support d'une automatisation de processus robotique, comprenant les étapes suivantes qui peuvent être exécutées par un processeur d'un dispositif :
- la fourniture d'une définition pour l'automatisation de processus robotique, également appelée schéma d'adressage, qui est conçue pour rendre sélectionnables les objets (O11, 012, 021, O22) d'un groupe d'objets inclus dans la définition afin qu'ils soient accessibles de façon automatisée au moyen d'une commande par un logiciel d'automatisation, **caractérisé en ce que**
- au moins deux adresses basées sur le web sont utilisées pour créer cette définition, dans lequel un objet du groupe est affecté à chaque adresse, dans lequel
- une comparaison des au moins deux adresses basées sur le web est effectuée entre elles en ce qui concerne les écarts dans les chaînes de caractères des adresses basées sur le web afin d'identifier un emplacement contigu avec au moins un écart correspondant à un nombre, et dans lequel
- les différents caractères identifiés dans la comparaison sont remplacés par un espace réservé, et dans lequel
une sélection automatisée d'un ou de plusieurs de ces objets est effectuée, dans lequel la sélection est guidée par l'espace réservé respectif à travers lequel une adresse absolue commune est référencée et/ou dérivée pour tous les objets du groupe d'objets, dans lequel, lors de l'adressage de tous les objets du groupe, l'espace réservé est remplacé par un numéro d'index, lequel est réparti entre les objets du groupe dans un ordre prédéterminé, afin d'obtenir l'adresse basée sur le web appropriée de l'objet respectif, et dans lequel le schéma d'adressage des au moins deux adresses basées sur le web est fourni sous la forme d'une taxonomie ou d'une ontologie, dans lequel les plans individuels de la taxonomie ou de l'ontologie correspondent à une dimension du groupe si le groupe d'objets présente plus d'une dimension.

2. Procédé selon la revendication précédente, **caractérisé en ce que** les objets dont les adresses sont comparées entre elles sont du même type d'objet ou sont affectés au même type d'objet et sont éventuellement identifiés en fonction du type d'objet.

3. Procédé selon la revendication précédente, **caractérisé en ce qu'**un espace réservé est introduit par dimension.

4. Procédé selon l'une des revendications précédentes, **caractérisé en ce que**, si le groupe d'objets présente plus d'une dimension, tous les objets appartenant à la même dimension sont identifiés en même temps.

5. Dispositif (300) doté d'un processeur qui est configuré pour supporter l'automatisation de processus robotique, comprenant :
- une unité de mise à disposition (500) sous la forme d'une base de données de définition (500), qui est conçue pour fournir un schéma d'adressage pour l'automatisation de processus robotique, lequel rend sélectionnables les objets d'un groupe d'objets (O11, 012, 021, O22) inclus dans la définition, de manière à ce que ceux-ci puissent être adressés de manière automatisée au moyen d'une commande par un logiciel d'automatisation, **caractérisé en ce que**
- au moins deux adresses basées sur le web sont utilisées pour créer cette définition, dans lequel un objet du groupe est affecté à chaque adresse,
- une unité de comparaison implémentée dans une unité de traitement, qui est conçue pour comparer au moins deux adresses basées sur le web par rapport à la chaîne de caractères afin d'identifier un emplacement contigu avec des écarts correspondant à un nombre,
- une unité de conversion implémentée dans l'unité de traitement, qui est conçue pour remplacer les caractères divergents identifiés lors de la comparaison par un espace réservé,
- une unité de sélection implémentée dans l'unité de traitement, qui est conçue pour sélectionner automatiquement un ou plusieurs de ces objets, dans lequel la sélection peut être effectuée à l'aide de l'espace réservé respectif, à travers lequel une adresse absolue commune pour tous les objets du groupe d'objets peut être référencée et/ou dérivée, dans lequel, lors de l'adressage de tous les objets du groupe, l'espace réservé est remplacé par un numéro d'index, lequel est réparti entre les objets du groupe dans un ordre prédéterminé, afin d'obtenir l'adresse basée sur le web appropriée de l'objet respectif, et dans lequel le schéma d'adressage des au moins deux adresses basées sur le web est fourni sous la forme d'une taxonomie ou d'une ontologie, dans lequel les plans individuels de la taxonomie ou de l'ontologie correspondent à une dimension du groupe si le groupe d'objets présente plus d'une dimension.

6. Dispositif selon la revendication précédente, **caractérisé en ce que** les objets dont les adresses peuvent être comparées entre elles sont du même type d'objet ou sont affectés au même type d'objet et sont éventuellement identifiés en fonction du type d'objet.

7. Dispositif selon la revendication précédente, **caractérisé en ce qu'**un espace réservé peut être introduit par dimension.

8. Procédé selon l'une des revendications précédentes du dispositif, **caractérisé en ce que**, si le groupe d'objets présente plus d'une dimension, tous les objets appartenant à la même dimension sont identifiés en même temps.

9. Produit de programme informatique avec instructions pour mettre en œuvre le procédé selon l'une des revendications de procédé mentionnées ci-dessus, si le produit de programme informatique est exécuté sur un dispositif selon l'une des revendications de dispositif mentionnées ci-dessus.
